(19) Europäisches Patentamt
European Patent Office
Office européen des brevets

(11) **EP 2 602 565 B1**

(12) **EUROPEAN PATENT SPECIFICATION**

(45) Date of publication and mention
of the grant of the patent:
**13.03.2019 Bulletin 2019/11**

(51) Int Cl.:
*F25B 25/00* (2006.01)     *F25B 1/10* (2006.01)
*F25B 41/04* (2006.01)

(21) Application number: **11814539.0**

(22) Date of filing: **28.07.2011**

(86) International application number:
**PCT/JP2011/067266**

(87) International publication number:
**WO 2012/017912 (09.02.2012 Gazette 2012/06)**

(54) **REFRIGERATOR CONTROLLER**

KÜHLSCHRANKSTEUERGERÄT

DISPOSITIF DE COMMANDE DE RÉFRIGÉRATEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.08.2010 JP 2010177749**

(43) Date of publication of application:
**12.06.2013 Bulletin 2013/24**

(73) Proprietor: **Mitsubishi Heavy Industries, Ltd.
Tokyo 108-8215 (JP)**

(72) Inventors:
• **MATSUO Minoru**
 **Tokyo 108-8215 (JP)**
• **UEDA Kenji**
 **Tokyo 108-8215 (JP)**
• **NIKAIDO Satoshi**
 **Tokyo 108-8215 (JP)**

(74) Representative: **Studio Torta S.p.A.
Via Viotti, 9
10121 Torino (IT)**

(56) References cited:
**JP-A- 2004 144 457     JP-A- 2006 177 568
JP-A- 2008 134 013     US-A- 4 463 574
US-A- 4 483 152      US-A1- 2010 094 434
US-B1- 6 185 946**

## Description

### TECHNICAL FIELD

The present invention relates to a chiller control apparatus that performs control of chillers in a chiller system including a plurality of chillers.

Priority is claimed on Japanese Patent Application No. 2010-177749, filed August 6, 2010, the content of which is incorporated herein by reference.

### BACKGROUND ART

Generally, chillers have different efficiency (a generated cold amount with respect to consumed energy) depending on a load. For this reason, in order to efficiently operate a chiller, it is necessary to recognize the efficiency of the chiller and control the chiller so as to operate with an appropriate load.

In view of this, Patent Document 1 discloses technology for calculating an optimal operation range (an efficiently operable range) of a chiller, and technology for determining whether to change the number of operating chillers based on the calculated optimal operation range.

### CITATION LIST

[Patent Document]

[Patent Document 1] Japanese Patent Application Laid-Open Publication No. 2009-204262
[Patent Document 2] US 4,463,574

### DISCLOSURE OF INVENTION

Problems to be Solved by the Invention

However, Patent Document 1 does not disclose a method of optimizing efficiency of an entire chiller system. Accordingly, with the technology disclosed in Patent Document 1, operation conditions of individual chillers can be evaluated for optimization, but optimal control of the entire chiller system cannot be immediately performed. Patent Document 2 discloses a chiller control apparatus according to the preamble of claim 1.

Regarding a chiller system including chillers having different characteristics, such as a chiller system including multiple types of chillers, the efficiency of the entire chiller system differs depending on operating chillers. For this reason, it is necessary to appropriately select a chiller to be operated depending on conditions. For example, regarding a variable-speed chiller (a chiller with a compressor that can be variable-speed controlled), a load enabling efficient operation differs depending on a cooling water temperature, thereby requiring flexible judgment depending on the cooling water temperature.

The present invention has been made in view of the circumstances described above. An object of the present invention is to provide a chiller control apparatus capable of appropriately selecting a chiller to be subjected to stage increase or stage decrease depending on conditions in order to efficiently operate an entire chiller system.

Means for Solving the Problems

The present invention has been made to solve the above problems. A chiller control apparatus according to the present invention is defined by claim 1.

Further, regarding the chiller control apparatus, the chiller determination unit may include a stage increase operation pattern extraction unit configured to obtain all chiller operation patterns of combinations of chillers selected from currently stopped chillers and currently operating chillers, in a case that the number-of-chillers change determination unit determines to increase the number of chillers; and a chiller-to-be-operated selection unit configured to obtain efficiency index values for all the chiller operation patterns obtained by the stage increase operation pattern extraction unit and select a chiller corresponding to the chiller operation pattern making the efficiency index value highest, as a chiller to be operated.

Further, regarding the chiller control apparatus, in a case that there are a plurality of selectable chillers, the chiller-to-be-operated selection unit may be configured to acquire an operation time of the corresponding chiller and select a chiller having the shortest operation time.

Further, regarding the chiller control apparatus, the chiller determination unit may include: a stage decrease operation pattern extraction unit configured to obtain all chiller operation patterns of combinations of chillers whose operation is kept by stopping one chiller of the currently operating chillers, in a case that the number-of-chillers change determination unit determines to decrease the number of chillers; and a chiller-to-be-stopped selection unit configured to obtain an entire efficiency index value for all the chiller operation patterns obtained by the stage decrease operation pattern extraction unit, and select a chiller corresponding to the chiller operation pattern making the efficiency index value highest, as a chiller to be stopped.

Further, regarding the chiller control apparatus, the chiller determination unit may include an excess load value calculation unit configured to obtain an excess load value for each currently operating chiller by subtracting from the required load, an optimal-load-range low value sum obtained by summing optimal-load-range low values, each of the optimal-load-range low values being set for each chiller as a threshold value of a load at a low load side that is an allowed efficiency range, in a case that the number-of-chillers change determination unit determines to decrease the number of chillers; and a chiller-to-be-stopped selection unit configured to obtain, for each of currently operating chillers, an efficiency index value when the chiller is operated with the excess load value, based on the excess load value obtained by the excess load value calculation unit and the relationship between the load and the efficiency index value, and select a chiller indicating the lowest efficiency index value as a chiller to be stopped.

Further, regarding the chiller control apparatus, when there are a plurality of selectable chillers, the chiller-to-be-stopped selection unit may be configured to acquire an operation time of the corresponding chiller and select the chiller having the longest operation time.

Effects of the Invention

According to the present invention, the chiller control apparatus can appropriately select a chiller to be subjected to stage increase or stage decrease depending on conditions in order to efficiently operate the entire chiller system.

BRIEF DESCRIPTION OF THE DRAWINGS

FIG. 1 is a configuration diagram illustrating a schematic configuration of a chiller system 1 according to an embodiment of the present invention.

FIG. 2 is a configuration diagram illustrating a schematic configuration of a chiller 21-1 according to the embodiment.

FIG. 3 is a configuration diagram illustrating a schematic configuration of a chiller control apparatus 100 according to the embodiment.

FIG. 4 is a flowchart illustrating a procedure of a process for the chiller control apparatus 100 to select a chiller whose operation state is to be changed according to the embodiment.

FIG. 5 is a configuration diagram illustrating a schematic configuration of the chiller control apparatus 100 including an excess load value calculation unit 132 according to the embodiment.

FIG. 6 is a flowchart illustrating a procedure of a process for the chiller control apparatus 100 to determine whether a required flow amount is satisfied, in addition to whether a required load is satisfied according to the embodiment.

BEST MODE FOR CARRYING OUT THE INVENTION

Hereinafter, embodiments of the present invention will be described with reference to drawings. Hereinafter, a case in which a chiller system 1 supplies cold is explained. The present invention may be applied similarly to a case in which the chiller system 1 supplies heat.

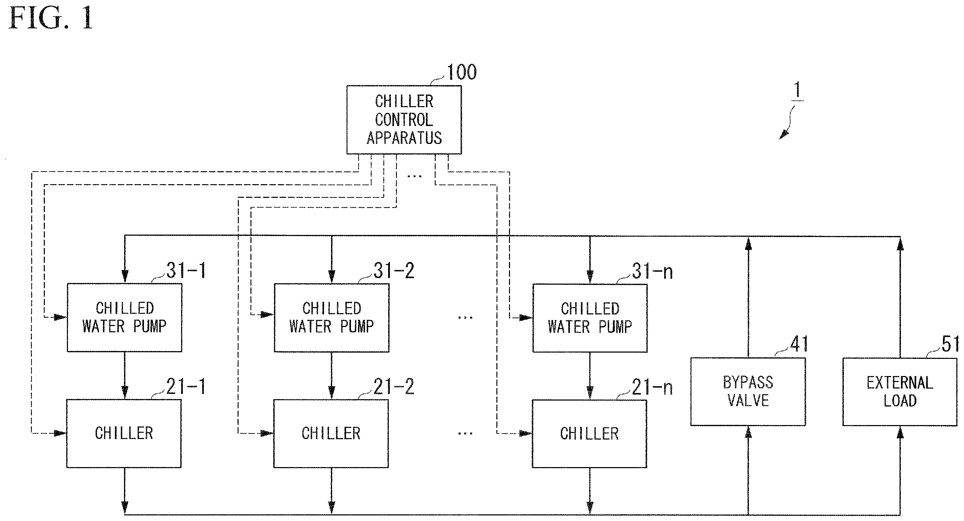

FIG. 1 is a configuration diagram illustrating a schematic configuration of the chiller system 1 according to an embodiment of the present invention. In FIG. 1, the chiller system 1 includes: n chillers 21-1 to 21-n (n is a positive integer); chilled water pumps 31-1 to 31-n; a bypass valve 41; and a chiller control apparatus 100. Further, the chiller system 1 is connected to an external load 51.

The chillers 21-1 to 21-n cool chilled water and supply the chilled water to the external load 51. Accordingly, the external load 51 is cooled by the chilled water from the chiller 21.

The chilled water pumps 31-1 to 31-n send the chilled water to the respective chillers. The bypass valve 41 bypasses the chilled water from the chillers 21-1 to 21-n. The chiller control apparatus 100 controls each unit. Particularly, the chiller control apparatus 100 determines a timing to switch the number of operating chillers among the chillers 21-1 to 21-n, determines a chiller whose operation is to be switched, and thereby controls the number of chillers 21-1 to 21-n.

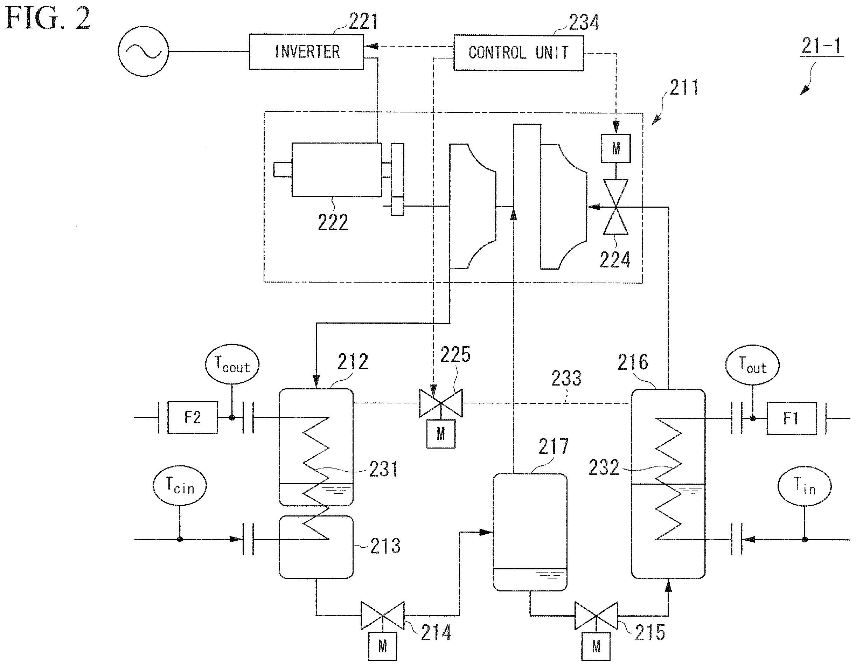

FIG. 2 is a configuration diagram illustrating a schematic configuration of the chiller 21-1. In FIG. 2, the chiller 21-1 includes: a centrifugal compressor 211; a condenser 212; a sub-cooler 213; a high-pressure expansion valve 214; a low-pressure expansion valve 215; an evaporator 216; an intermediate cooler 217; an inverter 221; a hot-gas bypass valve 225; a cooling water heat exchanger tube 231; a chilled water heat exchanger tube 232; a hot-gas bypass tube 233; and a control unit 234. The centrifugal compressor 211 includes an electric motor 222 and an inlet guide vane (IGV) 224.

The chiller 21-1 cools a refrigerant in a 2-stage compression, 2-stage expansion sub-cooling cycle and cools the chilled water using the cooled refrigerant.

The centrifugal compressor 211 is a 2-stage compressor and compresses a gas refrigerant. The condenser 212 condenses and liquefies a high-temperature, high-pressure gas refrigerant compressed by the centrifugal compressor 211. The sub-cooler 213 is provided downstream of a refrigerant flow of the condenser 212, and subcools a liquid refrigerant condensed by the condenser 212. The cooling water heat exchanger tube 231 is inserted into the condenser 212 and the sub-cooler 213, and cools the refrigerant using the cooling water flowing inside the tube. The cooling water flowing inside the cooling water heat exchanger tube 231 cools the refrigerant. In a cooling tower, the condensing heat is discharged to the outside and flows inside the cooling water heat exchanger tube 231 again.

The high-pressure expansion valve 214 and the low-pressure expansion valve 215 expand the liquid refrigerant from the sub-cooler 213. The intermediate cooler 217 cools the liquid refrigerant expanded by the high-pressure expansion valve 214. The evaporator 216 evaporates the liquid refrigerant expanded by the low-pressure expansion valve 215. The chilled water heat exchanger tube 232 is inserted into the evaporator 216. The chilled water flowing inside the chilled water heat exchanger tube 232 is cooled by absorbing vaporization heat when the refrigerant is evaporated.

Thus, the chiller 21-1 cools the chilled water and supplies the chilled water to the external load 51.

Further, when the chiller 21-1 is a chiller in which a compressor is capable of being variable speed controlled, load control of the chiller 21-1 is performed by control of the number of revolutions of the centrifugal compressor 211 and control of capacity using the inlet guide vane 224 and the hot-gas bypass tube 233.

The electric motor 222 drives the centrifugal compressor 211. The inverter 221 controls the number of revolutions of the centrifugal compressor 211 by controlling the number of revolutions of the electric motor 222.

The inlet guide vane 224 is provided in a refrigerant inlet of the centrifugal compressor 211 and controls a suction refrigerant flow amount to perform the capacity control of the chiller 21-1.

The hot-gas bypass tube 233 is provided between a gas phase portion of the condenser 212 and a gas phase portion of the evaporator 216 to bypass the refrigerant gas. The hot-gas bypass valve 225 controls a flow amount of the refrigerant flowing inside the hot-gas bypass tube 233. The hot-gas bypass valve 225 adjusts the hot gas bypass flow amount to thereby perform more detailed capacity control than the capacity control by the inlet guide vane 224.

Further, when the chiller is a chiller with a fixed-speed controlled compressor, the load control is performed by the capacity control by the inlet guide vane 224 and the hot-gas bypass tube 233.

The control unit 234 controls each unit. In particular, the control unit 234 operates the stopped chiller 21-1 or stops the operating chiller 21-1 based on a control signal input from the chiller control apparatus 100 (FIG. 1). (Hereinafter, to operate a stopped chiller or to stop an operating chiller is referred to as "to change an operation state"). Further, the control unit 234 controls the inverter 221, the inlet guide vane 224, and the hot-gas bypass valve 225 based on the control signal input from the chiller control apparatus 100 to perform load control of the chiller 21-1. Further, the control unit 234 obtains optimal-load-related information, which will be described below.

By the load control performed by the control unit 234, the chiller 21-1 supplies the chilled water at a rated temperature (e.g., 7°C) to the external load 51.

Further, a cooling water flow amount is measured by a flowmeter F2, a cooling water outlet temperature is measured by a temperature sensor Tcout, and a cooling water inlet temperature is measured by a temperature sensor Tcin. Further, the chilled water flow amount is measured by the flowmeter F1, a chilled water outlet temperature is measured by the temperature sensor Tout, and a chilled water inlet temperature is measured by a temperature sensor Tin. These measured values are used when the control unit 234 controls each unit, and are used for the control unit 234 to obtain the optimal-load-related information, which will be described below.

Further, configurations of the chillers 21-2 to 21-n are similar to that described with reference to FIG. 2.

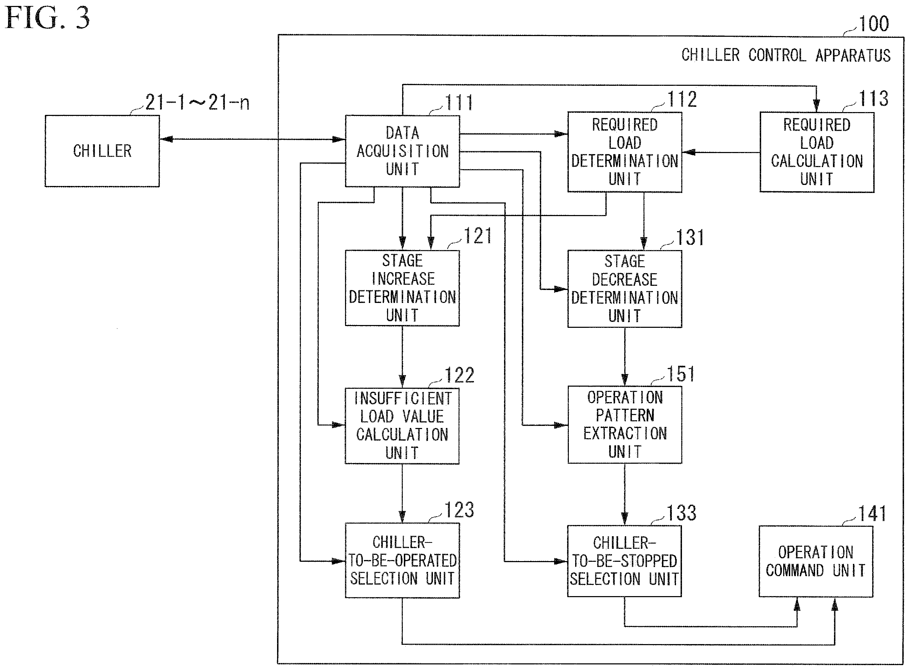

FIG. 3 is a configuration diagram illustrating a schematic configuration of the chiller control apparatus 100. In FIG. 3, the chiller control apparatus 100 includes: a data acquisition unit 111; a required load determination unit 112; a required load calculation unit 113; a stage increase determination unit 121; an insufficient load value calculation unit 122; a chiller-to-be-operated selection unit 123; a stage decrease determination unit 131; a chiller-to-be-stopped selection unit 133; an operation command unit 141; and an operation pattern extraction unit (a stage decrease operation pattern extraction unit) 151.

The data acquisition unit 111 transmits and receives to and from the chillers 21-1 to 21-n, information such as supply and return water temperature, a main tube flow amount, an optimal load range of the chiller, or efficiency of the chiller when operated in the optimal load range.

The required load calculation unit 113 calculates a required load indicating a cold amount or a heat amount to be generated by the chiller system 1, based on the supply and return water temperature and the main tube flow amount acquired by the data acquisition unit 111.

The required load determination unit 112 compares a sum of optimal loads with the required load for operating chillers to determine whether to perform a process at the time of stage increase (when the number of operating chillers is increased) or a process at the time of stage decrease (when the number of operating chillers is decreased).

When the required load determination unit 112 determines to perform the process at the time of stage increase, the stage increase determination unit 121 determines whether to actually perform stage increase.

The insufficient load value calculation unit 122 calculates an insufficient load value indicating an insufficient amount of a load when each operating chiller is operated with an optimal load.

The chiller-to-be-operated selection unit 123 selects the chiller to be started up by the chiller system 1 in order to satisfy the required load and efficiently operate the chillers, based on the insufficient load value calculated by the insufficient load value calculation unit 122 and the optimal-load-related information of each stopped chiller.

When the required load determination unit 112 determines to perform the process at the time of the stage decrease, the stage decrease determination unit 131 determines whether to actually perform the stage decrease.

The operation pattern extraction unit 151 extracts a possible combination of chillers to be operated in such a manner that the required load is satisfied (hereinafter, information indicating a combination of chillers to be operated is referred to as "a chiller operation pattern"). The chiller-to-be-stopped selection unit 133 selects chillers to be stopped by the chiller system 1 in order to satisfy the required load and efficiently operate chillers, based on the chiller operation pattern extracted by the operation pattern extraction unit 151 and the optimal-load-related information of each operating chiller.

The operation command unit 141 transmits a control signal for operating the chiller to be started up, transmits a control signal for stopping the chiller to be stopped, and transmits to the operating chiller, a control signal as a flow amount command for changing load sharing.

Further, the required load determination unit 112, the stage increase determination unit 121, and the stage decrease determination unit 131 constitute a number-of-chillers change determination unit, which determines based on the required load whether to change the number of currently selected chillers.

In other words, as will be described below, first, the required load determination unit 112 determines based on the required load whether to perform the process at the time of stage increase or the process at the time of the stage decrease. If the required load determination unit 112 determines to perform the process at the time of stage increase, the stage increase determination unit 121 determines whether to actually perform the stage increase.

On the other hand, if the required load determination unit 112 determines to perform the process at the time of the stage decrease, the stage decrease determination unit 131 determines whether to actually perform the stage decrease.

Further, the insufficient load value calculation unit 122, the chiller-to-be-operated selection unit 123, the operation pattern extraction unit 151, and the chiller-to-be-stopped selection unit 133 constitute a chiller determination unit, which determines a chiller whose operation state is to be changed, based on a relationship between a load and an efficiency index value (a COP, which will be described below) of each chiller and on the required load, when the number of chillers is changed based on the determination result of the number-of-chillers change determination unit.

In other words, as will be described below, when the stage increase determination unit 121 determines to perform the stage increase, the insufficient load value calculation unit 122 calculates the insufficient amount of the load, and the chiller-to-be-operated selection unit 123 determines a chiller suitable for operation with the insufficient amount of a load, based on the relationship between the load and the COP of each chiller.

On the other hand, when the stage decrease determination unit 131 determines to perform the stage decrease, the operation pattern extraction unit 151 extracts the chiller operation pattern according to the required load, and the chiller-to-be-stopped selection unit 133 determines a chiller to be stopped based on the chiller operation pattern achieving high efficiency of the entire chiller system 1 among the extracted chiller operation patterns.

Further, the number-of-chillers change determination unit and the chiller determination unit constitute a chiller selection unit, which selects a chiller to be operated from among a plurality of chillers in response to the load request. In other words, based on the result of the determination by the number-of-chillers change determination unit, the chiller determination unit selects a chiller to be subjected to stage increase or a chiller to be subjected to stage decrease, and thereby selects the chiller to be operated from among the chillers 21-1 to 21-n (FIG. 1).

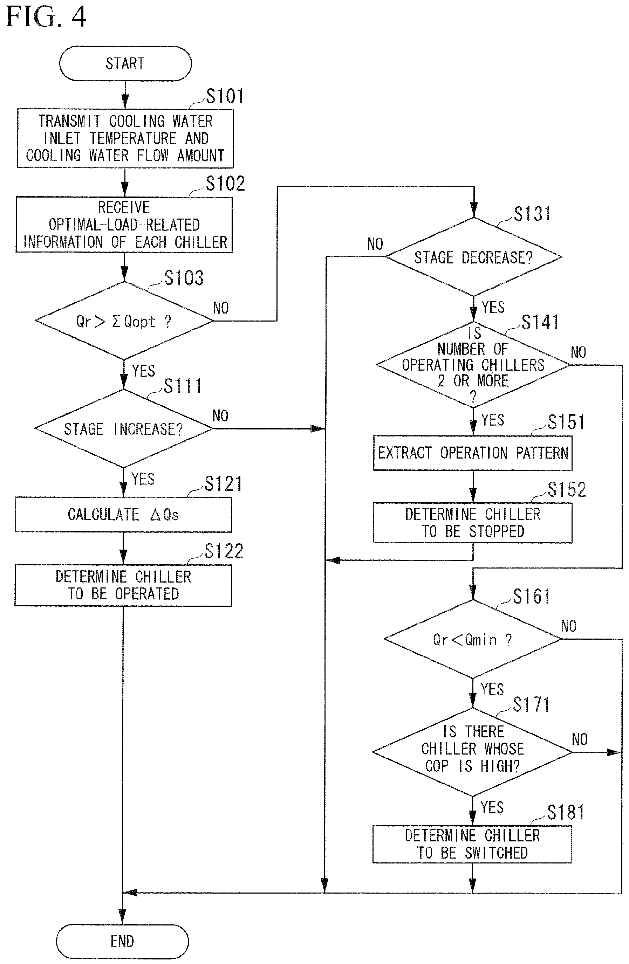

Next, an operation of the chiller control apparatus 100 is described with reference to FIG. 4.

FIG. 4 is a flowchart illustrating a procedure of a process for the chiller control apparatus 100 to select a chiller whose operation state is to be changed. In FIG. 4, first, the data acquisition unit 111 transmits information, such as a cooling water inlet temperature or a cooling water flow amount for each stopped chiller.

Further, when all the chillers are stopped, a reachable cooling water inlet temperature is calculated based on an ambient wet-bulb temperature. Further, the cooling water flow amount is assumed to be a rated flow amount (step S101).

Then, each of the chillers 21-1 to 21-n calculates an optimal-load-range high value, an optimal-load-range low value, an optimal-load-range optimal value, an optimal-load-range high value COP, an optimal-load-range low value COP, and an optimal-load-range optimal value COP, and transmits those calculated values to the data acquisition unit 111.

Here, a COP (Coefficient Of Performance) is an efficiency index value indicating efficiency of the chiller, and is calculated by dividing a load of the chiller (refrigeration capability) by consumption energy. Generally, chillers have different COPs depending on operating environments of the chillers, such as the cooling water inlet temperature or the cooling water flow amount, and loads required for the chillers.

For this reason, each of the chillers 21-1 to 21-n in an actual apparatus stores a table in which an operating environment, each value of the load, and the COP for each value are associated with one another, which are generated based on the COPs previously measured under various operating environments and loads. Alternatively, each of the chillers 21-1 to 21-n previously stores in the table, an equation for deriving the COP according to mechanical properties from the cooling water condition and each value of the load.

Further, a COP based on consumption energy of the chiller may be used as the COP. Alternatively, a COP based on consumption energy including consumption energy of an auxiliary device, such as a chilled water pump, a cooling water pump or a cooling tower fan, may be used as the COP.

Further, the optimal load range refers to a range of a load in which the chiller can be operated with high efficiency, such as a load range in which the COP of the chiller is equal to or more than a predetermined value. Each of the chillers 21-1 to 21-n can obtain the optimal load range using the above-described table or by applying the cooling water condition and each value of the load to the above-described equation.

Further, the optimal-load-range high value refers to a maximum load value in the optimal load range. The optimal-load-range high value is a threshold value set as a target so that a load of the chiller does not exceed this value. Further, the optimal-load-range low value refers to a minimum load value in the optimal load range. The optimal-load-range low value is a threshold value set as a target so that a load of the chiller does not go below this value. Further, the optimal-load-range optimal value refers to a load value in the optimal range at which the COP is maximized.

Further, the optimal-load-range high value COP refers to a COP when the chiller is operated with the optimal-load-range high value. The optimal-load-range low value COP refers to a COP when the chiller is operated with the optimal-load-range low value. The optimal-load-range optimal value COP refers to a COP when the chiller is operated with the optimal-load-range optimal value.

Hereinafter, the optimal-load-range high value, the optimal-load-range low value, the optimal-load-range optimal value, the optimal-load-range high value COP, the optimal-load-range low value COP, and the optimal-load-range optimal value COP are referred to as "optimal-load-related information."

The operating chiller acquires information such as a cooling water inlet temperature or a cooling water flow amount, as data for control of the chiller, and calculates the optimal-load-related information based on the information. Meanwhile, the stopped chiller cannot measure the cooling water inlet temperature, the cooling water flow amount, or the like, since auxiliary devices are stopped. For this reason, the stopped chiller calculates the optimal-load-related information based on the information such as the cooling water inlet temperature or the cooling water flow amount transmitted from the data acquisition unit 111.

Further, the data acquisition unit 111, rather than the control unit of each chiller, may calculate the optimal-load-related information. Accordingly, the amount of communication from the chiller to the chiller control apparatus 100 can be reduced. Meanwhile, when the control unit of each chiller calculates the optimal-load-range high value or the like, the control unit can calculate the optimal-load-range high value or the like according to the actual control, thus reducing the calculation amount of the chiller control apparatus 100. Further, when the control unit of each chiller calculates the optimal-load-related information, the chiller control apparatus 100 need not store a characteristic parameter of each chiller. Accordingly, when a chiller is exchanged, it is unnecessary to perform adjustment on the chiller control apparatus 100 (step S102).

Next, the required load calculation unit 113 calculates a required load Qr (a value required as a sum of loads of the chillers) and outputs the required load to the required load determination unit 112. The required load calculation unit 113 multiplies a temperature difference between the main tube feedback water temperature and the main tube sent water temperature by the main tube flow amount to thereby calculate a cold amount or heat amount to be generated by the chillers 21-1 to 21-n as a required load. Further, when all the chillers are stopped, a value previously set as an initial required load is set to be the required load.

Then, the required load determination unit 112 determines whether a sum $\sum Qopt$ of the optimal-load-range optimal values Qopt of the respective operating chillers acquired by the data acquisition unit 111 is less than the required load Qr calculated by the required load calculation unit 113 (step S103). If it is determined that the optimal-load-range optimal value sum is less than the required load (step S103: YES), whether to perform the stage increase is determined as the process at the time of the stage increase in steps S111 to S122, and the chiller to be subjected to stage increase is further selected when it is determined to perform the stage increase.

Specifically, the stage increase determination unit 121 determines whether to perform stage increase, based on whether the required load calculated by the required load calculation unit 113 is equal to or more than the stage increase switching point. Here, the stage increase switching point is a load value set for each number of operating chillers. The stage increase determination unit 121 uses, as the stage increase switching point, a load value set as a stage increase switching point in association with the number of currently operating chillers (step S111). When the required load is less than the stage increase switching point, the stage increase determination unit 121 determines not to change the number of operating chillers (step S111: NO), and ends the process of FIG. 4.

On the other hand, if the required load is determined to be equal to or more than the stage increase switching point, the stage increase determination unit 121 determines to perform stage increase of chillers (step S111: YES), and the insufficient load value calculation unit 122 calculates an insufficient load value $\Delta Qs$ based on Equation (1).

$$\Delta Qs = Qu - \Sigma Qopt \qquad \cdots \text{ Equation (1)}$$

Here, Qu denotes the stage increase switching point, Qopt denotes the optimal-load-range optimal value, and $\Sigma Qopt$ denotes a sum of optimal-load-range optimal values of all operating chillers (step S121).

Next, the chiller-to-be-operated selection unit 123 obtains a COP of each stopped chiller when the chillers are operated with an insufficient load value $\Delta Qs$. For example, the chiller-to-be-operated selection unit 123 transmits the insufficient load value $\Delta Qs$ to each stopped chiller, requests a corresponding COP and acquires the COP.

Alternatively, the chiller-to-be-operated selection unit 123 may obtain an approximate equation of a relationship between the load and the COP based on three points of the optimal-load-range high value and the optimal-load-range high value COP, the optimal-load-range optimal value and the optimal-load-range optimal value COP, and the optimal-load-range low value and the optimal-load-range low value COP, and obtains a COP corresponding to the insufficient load value $\Delta Qs$ based on the equation. For example, the chiller-to-be-operated selection unit 123 obtains a quadratic curve passing through the three points where the load is indicated by an X axis and the COP is indicated by a Y axis, and obtains a COP corresponding to the insufficient load value $\Delta Qs$ on the quadratic curve.

Then, the chiller-to-be-operated selection unit 123 selects a chiller having the highest COP as the chiller to be subjected to stage increase, i.e., a chiller to be operated. The operation command unit 141 transmits a control signal for operating a chiller to the selected chiller. Further, the operation command unit 141 transmits a control signal as a flow amount command for changing load sharing, to operating chillers including a chiller that newly starts its operation. For example, the operation command unit 141 proportionally distributes the required load calculated by the required load calculation unit 113 according to the number of operating chillers, and transmits a control signal to each chiller so that the operation is performed with a load resulting from the proportional distribution. As the proportional distribution of the load, for example, division of the load at a ratio according to the optimal-load-range optimal value of each chiller may be considered.

Further, if the optimal-load-range high value is less than the insufficient load value (Qmax<$\Delta Qs$), the chiller-to-be-operated selection unit 123 compares, for the chiller, the optimal-load-range high value COP max, instead of the COP when operated with the insufficient load value $\Delta Qs$, with the COP of the other chiller. In other words, the chiller-to-be-operated selection unit 123 compares the COP when the chiller is operated with the maximum load in the optimal load range with the COP of the other chiller. Alternatively, when the insufficient load value $\Delta Qt$ is proportionally distributed to and shared among a plurality of stopped chillers and the operation can be performed within the optimal load range, a value obtained by weighted averaging of the COPs of the chillers according to the proportionally distributed and shared load may be compared with the COP of the other chiller.

Further, if the optimal-load-range low value is greater than the insufficient load value (Qmin>$\Delta Qs$), the chiller-to-be-operated selection unit 123 compares, for the chiller, the optimal-load-range low value COPmin, instead of the COP when operated with the insufficient load value $\Delta Qs$, with the COP of the other chiller. In other words, the chiller-to-be-operated selection unit 123 compares the COP when the chiller is operated with the minimum load in the optimal load range with the COP of the other chiller.

Further, when there are a plurality of chillers having the same COP value, the chiller-to-be-operated selection unit 123 selects a chiller having the shortest accumulated operation time, as a chiller to be subjected to stage increase. For example, each of the chillers 21-1 to 21-n measures an accumulated operation time of the chiller and transmits the accumulated operation time to the chiller control apparatus 100 at any time. If there are a plurality of chillers having the same COP value, the chiller selection unit 123 selects a chiller having the shortest accumulated operation time based on the accumulated operation times transmitted from the respective chillers. Accordingly, it is possible to suppress a discrepancy between the accumulated operation times of the chillers.

Further, the chiller-to-be-operated selection unit 123 may not only select a chiller having the highest COP, but also determine operation priorities of the stopped chillers in order of higher COPs. If the chiller system 1 starts up the chillers one by one, the chiller-to-be-operated selection unit 123 may select one chiller to be started up, as described above. Meanwhile, the chiller-to-be-operated selection unit 123 determines operation priorities of the plurality of chillers, making it possible for the chiller system 1 to start up other chillers when the selected chiller cannot be started up, for example, due to failure of the chiller (step S122).

Then, the chiller control apparatus 100 ends the process of FIG. 4.

Meanwhile, if it is determined in step S103 that a sum $\Sigma$Qopt of the optimal-load-range optimal values Qopt of the operating chillers is equal to or more than the required load (step S103: NO), whether to perform the stage decrease is determined in steps S131 to S152 as the process at the time of the stage decrease, and a chiller to be subjected to stage decrease is selected if it is determined to perform the stage decrease. Further, in steps S161 to S181, if the number of operating chillers is 1, it is determined whether to switch the chiller to another chiller.

Specifically, the stage decrease determination unit 131 determines whether to perform the stage decrease, based on whether the required load calculated by the required load calculation unit 113 is equal to or less than the stage decrease switching point. Here, if the chillers have the same capacities, the stage decrease switching point is a load value set for each number of operating chillers. If capacities of the chillers are different, the stage decrease switching point is a load value set by the combination. The stage decrease determination unit 131 uses, as the stage decrease switching point, a load value set as a stage decrease switching point in association with the number of currently operating chillers (step S131). If the required load is determined to be more than the stage decrease switching point, the stage decrease determination unit 131 determines not to change the number of operating chillers (step S131: NO) and ends the process of FIG. 4.

On the other hand, if the required load is determined to be equal to or less than the stage decrease switching point, the stage decrease determination unit 131 determines to perform the stage decrease of the chiller (step S131: YES), and the stage decrease determination unit 131 also determines whether the number of operating chillers is 2 or more (step S141). If the number of operating chillers is determined to be 2 or more (step S141: YES), the operation pattern extraction unit 151 selects one chiller from among the operating chillers, and extracts patterns of combinations of all the other operating chillers, as the chiller operation pattern. The operation pattern extraction unit 151 extracts the chiller operation patterns for all the operating chillers (step S151).

Then, the chiller-to-be-stopped selection unit 133 obtains the COP of the entire chiller system 1 for all the chiller operation patterns extracted by the operation pattern extraction unit 151. For example, the chiller-to-be-stopped selection unit 133 obtains the COP of each chiller when the chiller is operated according to a chiller operation pattern and the required load is proportionally distributed and shared, and obtains a value as the COP of the entire chiller system 1 by weighted averaging of the COPs of the chillers according to the proportionally distributed and shared load.

Then, the chiller-to-be-stopped selection unit 133 selects the chiller operation pattern making the COP of the entire chiller system 1 maximum, and selects a chiller to be subjected to stage decrease according to the selected chiller operation pattern. The operation command unit 141 transmits to the selected chiller, a control signal for stopping the chiller. Further, the operation command unit 141 transmits to the other operating chillers, a control signal as a flow amount command for changing load sharing. For example, the operation command unit 141 proportionally distributes the required load calculated by the required load calculation unit 113 according to the number of operating chillers, and transmits a control signal to each chiller so that operation is performed with a load resulting from the proportional distribution.

Further, the operation pattern extraction unit 151 may extract, as the chiller operation pattern, a combination of other operating chillers remaining after a plurality of chillers are selected from among the operating chillers. Accordingly, when the operation cannot be performed within the optimal load range only by subjecting one chiller to stage decrease, it is possible to obtain a high COP of the entire chiller system 1 by subjecting a plurality of chillers to stage decrease.

Meanwhile, according to the method in which the operation pattern extraction unit 151 selects only one chiller from among the operating chillers and extracts the chiller operation pattern, it is possible to extract only the chiller operation pattern highly likely to be optimal and to reduce the calculation amount. In other words, under a premise that the required load is not suddenly changed, it is possible to cope with the required load only by subjecting one chiller to stage increase. Therefore, only the chiller operation pattern that subjects one chiller to stage increase is extracted to select the chiller, thereby enabling a reduction in a calculation amount while coping with the required load (step S152).

Then, the chiller control apparatus 100 ends the process of FIG. 4.

On the other hand, if it is determined in step S141 that the number of chillers to be operated is 1 (step S141: NO), the chiller-to-be-stopped selection unit 133 determines whether an optimal-load-range low value of the operating chiller is greater than the required load (Qmin>Qr) (step S161). If the optimal-load-range low value of the operating chiller is determined to be greater than the required load (step S161: YES), the chiller-to-be-stopped selection unit 133 determines whether the chillers that are stopped include a chiller whose COP when operated with the required load is higher than that of the operating chiller (step S171). If it is determined that the chillers that are stopped include a chiller whose COP when operated with the required load is higher than that of the operating chiller (step S171: YES), a chiller having the highest COP when operated with the required load is selected as a chiller to be switched (step S181).

Then, the chiller control apparatus 100 ends the process of FIG. 4.

On the other hand, if it is determined in step S161 that an optimal-load-range low value of the operating chiller is equal to or less than the required load (step S161: NO), and if it is determined in step S141 that the stopped chillers include no chiller whose COP when operated with the required load is higher than that of the operating chiller (step S171: NO), the chiller control apparatus 100 ends the process of FIG. 4 without performing switching of the chiller.

Further, the chiller system 1 may not perform the process described in steps S161 to S181. In other words, the operation of the operating chiller may be continued without switching chillers irrespective of whether the optimal-load-range low value of the operating chiller is greater than the required load. Accordingly, the operation switching frequency of the chillers can be reduced. Further, the process of steps S161 to S181 need not be performed, and therefore the calculation amount can be reduced. Meanwhile, when the process described in steps S161 to S181 is performed, operation may be performed with a higher COP.

Further, the method in which the chiller-to-be-operated selection unit 123 selects a chiller to be subjected to stage increase is not limited to the method described in step S122.

For example, the operation pattern extraction unit (the stage increase operation pattern extraction unit) 151 may extract the chiller operation patterns according to the required load, and the chiller-to-be-operated selection unit 123 may select the chiller to be subjected to stage increase based on the chiller operation pattern achieving the optimal COP among the extracted chiller operation patterns.

Specifically, the operation pattern extraction unit 151 selects one chiller from among the stopped chillers, and combines the selected chiller with the operating chillers to extract a chiller operation pattern. The operation pattern extraction unit 151 extracts the chiller operation pattern for all the stopped chillers.

Also, the chiller-to-be-operated selection unit 123 obtains the COP of the entire chiller system 1 for all chiller operation patterns extracted by the operation pattern extraction unit 151. The COP of the entire chiller system 1 is calculated by, for example, weighted averaging of the COPs of the chillers according to a proportionally distributed and shared load when the required load is proportionally distributed to and shared among the chillers involved in the chiller operation pattern, as described in step S152.

Then, the chiller-to-be-operated selection unit 123 selects the chiller operation pattern making the COP of the entire chiller system 1 maximum, and selects the chiller to be subjected to stage increase according to the selected chiller operation pattern.

Thus, the chiller-to-be-operated selection unit 123 selects the chiller to be subjected to stage increase according to the chiller operation pattern, and thereby the COP is calculated based on a load actually shared by each chiller after the stage increase. Accordingly, the COP can be calculated more accurately and the chiller to be subjected to stage increase can be selected more appropriately.

Meanwhile, according to the method described in step S122, a COP for each stopped chiller may be calculated, and it is unnecessary to calculate the COP of the entire chiller system 1 by performing the extraction of the chiller operation pattern and the weighted average with the COP of the already operating chiller. Accordingly, a calculation amount decreases and chiller selection is performed more rapidly.

Further, the operation pattern extraction unit 151 may extract chiller operation patterns of combinations of a plurality of stopped chillers and operating chillers. Accordingly, when the operation cannot be performed within the optimal load range only by subjecting one chiller to stage increase, it is possible to obtain a high COP of the entire chiller system 1 by subjecting a plurality of chillers to stage increase.

Meanwhile, according to the above-described method in which the operation pattern extraction unit 151 selects only one chiller from among the stopped chillers and extracts the chiller operation pattern, only a chiller operation pattern highly likely to be optimal is extracted so that a calculation amount can be reduced. In other words, under the premise that the required load is not suddenly changed, the required load can be coped with by subjecting one chiller to stage increase. Therefore, only the chiller operation pattern that subjects one chiller to stage increase is extracted to select the chiller, it is possible to reduce the calculation amount while coping with the required load.

Further, the method in which the chiller-to-be-stopped selection unit 133 selects a chiller to be subjected to stage decrease is not limited to the method described in step S152.

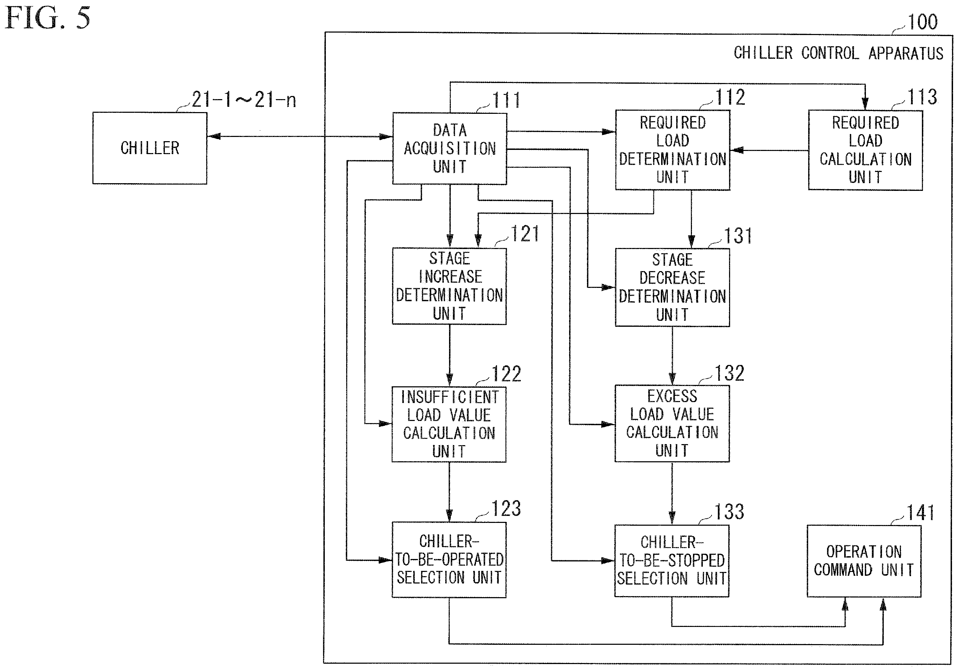

For example, the chiller control apparatus 100 may include an excess load value calculation unit 132, as shown in FIG. 5.

In this case, in step S151 of FIG. 4, the excess load value calculation unit 132 calculates an excess load value $\Delta Qt$ based on Equation (2).

$$\Delta Qt = \Sigma Qopt - Qd \qquad \cdots \text{ Equation (2)}$$

Here, $Qd$ denotes a stage decrease switching point. Further, $Qopt$ denotes the optimal-load-range optimal value, and $\Sigma Qopt$ denotes a sum of optimal-load-range optimal values $Qopt$ for all the operating chillers.

Next, in step S152, the chiller-to-be-stopped selection unit 133 obtains, for each operating chiller, a COP when the chiller is operated with the excess load value $\Delta Qt$.

Then, the chiller-to-be-stopped selection unit 133 selects the chiller having the lowest COP as a chiller to be subjected to stage decrease, i.e., a chiller to be stopped. The chiller having the lowest COP is stopped, thereby enabling an increase in the COP of the entire chiller system 1. The operation command unit 141 transmits to the selected chiller, a control signal for stopping the chiller. Further, the operation command unit 141 transmits to the other operating chillers, a control signal as a flow amount command for changing load sharing.

Further, when the optimal-load-range low value is greater than the excess load value (Qmin>$\Delta Qt$), the chiller-to-be-stopped selection unit 133 compares, for the chiller, an optimal-load-range low value COPmin, instead of the COP when the chiller is operated with the excess load value $\Delta Qt$, with the COP of the other chiller. In other words, the chiller-to-be-stopped selection unit 133 compares a COP reduction amount when the chiller operated with the minimum load in the optimal load range is stopped with the COP reduction amount of the other chiller.

Further, when the optimal-load-range high value is less than the excess load value (Qmax<$\Delta Qt$), the chiller-to-be-stopped selection unit 133 compares, for the chiller, the optimal-load-range high value COPmax, instead of the COP when the chiller is operated with the excess load value $\Delta Qt$, with the COP of the other chiller. In other words, the chiller-to-be-stopped selection unit 133 compares a COP reduction amount when the chiller operating with the maximum load in the optimal load range is stopped, with the COP reduction amount of the other chiller. Alternatively, when an excess load value $\Delta Qt$ is proportionally distributed to and shared among a plurality of operating chillers and the chillers can be operated in the optimal load range, a value obtained by weighted averaging of the COPs of the chillers according to the proportionally distributed and shared load may be compared with the COPs of the other chillers.

Further, when there are a plurality of chillers having the same COP value, the chiller-to-be-stopped selection unit 133 selects a chiller having the longest accumulated operation time as the chiller to be stopped. Accordingly, it is possible to suppress a discrepancy between the accumulated operation times of the chillers.

Further, the chiller-to-be-stopped selection unit 133 may determine stop priorities for the operating chillers in order of higher COPs, as in the case in which the chiller to be started up is selected.

Thus, the chiller-to-be-stopped selection unit 133 selects the chiller to be subjected to stage decrease based on the excess load value, and thus the COP for each operating chiller may be calculated. It is unnecessary to extract the chiller operation pattern and to calculate the COP of the entire chiller system 1 based on a weighted average of the COPs of the other operating chillers. In this respect, a calculation amount decreases, and the chiller selection can be performed more rapidly.

Meanwhile, according to the method described in step S152, the COP is calculated based on a load actually shared by each chiller after the stage decrease, thereby enabling more accurate calculation of the COP and more adequate selection of the chiller to be subjected to stage decrease.

Further, in FIG. 5, the insufficient load value calculation unit 122, the chiller-to-be-operated selection unit 123, the excess load value calculation unit 132, and the chiller-to-be-stopped selection unit 133 constitute a chiller determination unit.

Alternatively, the chiller control apparatus 100 may not include the required load determination unit 112, the stage increase determination unit 121 may always determine whether to perform the stage increase, and the stage decrease determination unit 131 may always determine whether to perform the stage decrease. Accordingly, it is possible to simplify a configuration of the device.

Alternatively, the chiller-to-be-operated selection unit 123 may always select a chiller at the time of stage increase. In other words, since a chiller is selected before the determination by the stage increase determination unit 121, the stage increase can be rapidly performed when the stage increase determination unit 121 determines to perform the stage increase. The same applies to the chiller-to-be-stopped selection unit 133.

Further, when the required flow amount is set, it may be determined whether the required flow amount is satisfied, in addition to whether the required load is satisfied.

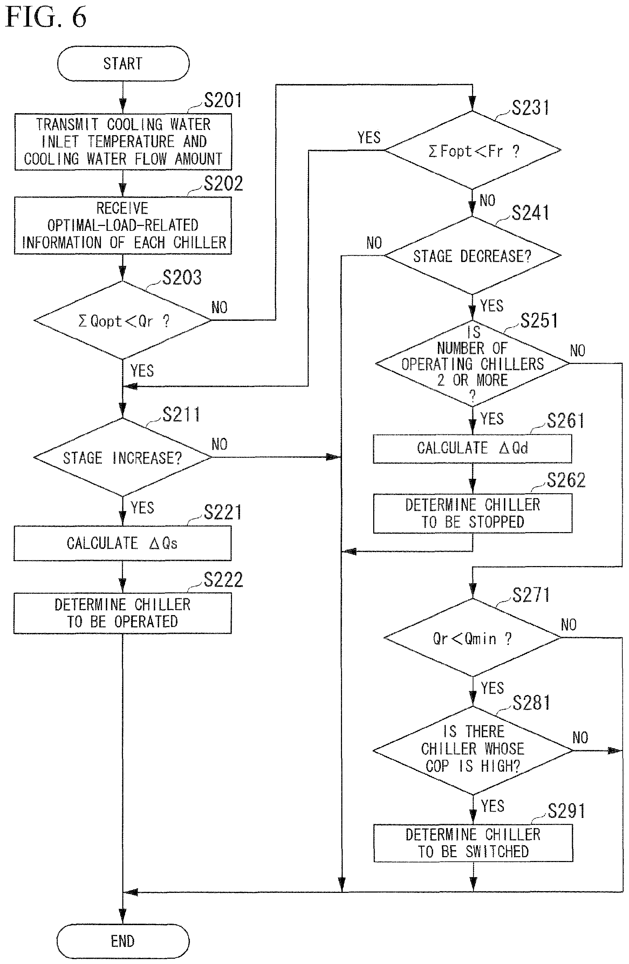

FIG. 6 is a flowchart illustrating a procedure of a process for the chiller control apparatus 100 to determine whether a required flow amount is satisfied, in addition to whether the required load is satisfied.

Steps S201 to S203 shown in FIG. 6 are similar to steps S101 to S103 shown in FIG. 4, step S222 is similar to step S122 shown in FIG. 4, step S251 is similar to step S141 shown in FIG. 4, and steps S271 to S291 are similar to steps S161 to S181 shown in FIG. 4.

If it is determined in step S203 of FIG. 6 that the optimal-load-range optimal value sum $\Sigma Qopt$ of the operating chillers is equal to or more than the required load Qr (step S203: NO), the required load determination unit 112 also determines whether the optimal-flow-amount-range optimal value sum $\Sigma Fop$ of the operating chillers is less than the required flow amount Fr. In this case, the optimal flow amount Fopt for each operating chiller is obtained using Equation (3), and a sum of the optimal flow amounts Fopt for the operating chillers is calculated and used as the optimal-flow-amount-range optimal value sum $\Sigma Fopt$.

$$Fopt=Qopt/Cp\times\rho\times(Tr\_i-Ts\_i) \qquad \cdots \text{ Equation (3)}$$

Here, Tr_i denotes a chilled water return temperature of the chiller i (i is a positive integer such that $1 \leq i \leq n$) and Ts_n denotes a chilled water supply temperature of the chiller i. Further, Cp denotes a specific heat [kJ/(kg·°C)] of the chilled water and $\rho$ denotes a density [kg/m$^3$] of the chilled water (step S231).

Also, if the optimal-flow-amount-range optimal value sum $\sum$Fopt is determined to be less than the required flow amount Fr (step S231: YES), whether to perform the stage increase is determined in steps S211 to 222 as the process at the time of stage increase is to be performed is determined, and the chiller to be subjected to stage increase is selected when it is determined to perform the stage increase. On the other hand, if the optimal-flow-amount-range optimal value sum $\sum$Fopt is determined to be equal to or more than the required flow amount Fr (step S231: NO), whether to perform the stage decrease is determined in steps S241 to S262 as the process at the time of the stage decrease, and the chiller to be subjected to stage decrease is selected when it is determined to perform the stage decrease. Further, in steps S271 to S291, when the number of operating chillers is 1, whether to switch the one chiller to other chillers is determined.

In step S211, the stage increase determination unit 121 determines based on the required load whether the stage increase is necessary based on the required flow amount, in addition to whether the stage increase is necessary, which has been described in step S111 of FIG. 4. Specifically, the stage increase determination unit 121 determines whether the required load is equal to or more than the stage increase switching point, and determines whether the required flow amount is equal to or more than the stage increase switching flow amount. Here, the stage increase switching flow amount is a flow amount value set for each number of operating chillers. The stage increase determination unit 121 uses, as the stage increase switching flow amount, a flow amount value set as a stage increase switching flow amount in association with the number of currently operating chillers (step S211). If the required load is determined to be less than the stage increase switching point and if the required flow amount is determined to be less than the stage increase switching flow amount, the stage increase determination unit 121 determines not to change the number of operating chillers (step S211: NO), and ends the process of FIG. 6.

On the other hand, if the required load is determined to be equal to or more than the stage increase switching point or if the required flow amount is determined to be equal to or more than the stage increase switching flow amount, the stage increase determination unit 121 determines to perform stage increase of the chillers (step S211: YES), and the process proceeds to step S221.

In step S221, the stage increase switching point Qu is calculated based on Equation (4) instead of using the stage increase switching point Qu used in step S121 of FIG. 4.

$$Qu=Fu\times(Tr-Ts)\times Cp\times\rho \qquad \cdots \text{ Equation (4)}$$

Here, Fu denotes the stage increase switching flow amount [m$^3$/h], Tr denotes a chilled water return temperature [°C], Ts denotes a chilled water supply temperature [°C], Cp denotes a specific heat [kJ/(kg·°C)] of the chilled water, and $\rho$ denotes density [kg/m$^3$] of the chilled water.

Then, the required load determination unit 112 calculates the insufficient load value $\Delta$Qs based on Equation (1), similarly to step S121 of FIG. 4.

Further, in step S241, the stage decrease determination unit 131 not only determines based on the required load whether the stage decrease is necessary, as described in step S131 of FIG. 4, but also determines based on the required flow amount whether the stage decrease is necessary. Specifically, the stage decrease determination unit 131 determines whether the required load is equal to or less than the stage decrease switching point and determines whether the required flow amount is equal to or less than the stage decrease switching flow amount. Here, the stage decrease switching flow amount is a flow amount value set for each number of operating chillers. The stage decrease determination unit 131 uses, as the stage decrease switching flow amount, a flow amount value set as a stage decrease switching flow amount in association with the number of currently operating chillers (step S241). If the required load is determined to be equal to or more than the stage decrease switching point and if the required flow amount is determined to be equal to or more than the stage decrease switching flow amount, the stage decrease determination unit 131 determines not to change the number of operating chillers (step S241: NO) and ends the process of FIG. 6.

On the other hand, if the required load is determined to be equal to or less than the stage decrease switching point or if the required flow amount is determined to be equal to or less than the stage decrease switching flow amount, the stage decrease determination unit 131 determines not to perform stage decrease of the chillers (step S241: YES), and the process proceeds to step S251.

In step S261, the stage decrease switching point Qd is calculated based on Equation (5) instead of using the stage decrease switching point Qd used in step S151 of FIG. 4.

$$Qd=Fd\times(Tr-Ts)\times Cp\times\rho \qquad \cdots \text{ Equation (5)}$$

Here, Fd denotes the stage decrease switching flow amount [m$^3$/h], Tr denotes a chilled water return temperature [°C], Ts denotes a chilled water supply temperature [°C], Cp denotes specific heat [kJ/(kg·°C)] of the chilled water, and $\rho$ denotes density [kg/m$^3$] of the chilled water.

Also, the required load determination unit 112 calculates an excess load value $\Delta Qt$ based on Equation (2), as in step S151 of FIG. 4.

In step S262, the chiller-to-be-stopped selection unit 133 obtains, for each operating chiller, a COP when the chiller is operated with the excess load value $\Delta Qt$, in a similar manner to that described above.

Then, the chiller-to-be-stopped selection unit 133 selects the chiller having the lowest COP as a chiller to be subjected to stage decrease, i.e., a chiller to be stopped. The chiller having the lowest COP is stopped, thereby enabling an increase in the COP of the entire chiller system 1. The operation command unit 141 transmits a control signal as a stop command to the selected chiller. Further, the operation command unit 141 transmits to the other operating chillers, a control signal as a flow amount command for changing load sharing. For example, the operation command unit 141 proportionally distributes the required load calculated by the required load calculation unit 113 according to the number of operating chillers, and transmits a control signal to each chiller so that the chiller is operated with a load resulting from the proportional distribution.

Thus, the required load determination unit 112 determines whether the required flow amount is satisfied with the operating chillers, in addition to whether the required load is satisfied with the operating chillers. Thereby, it is possible to cope with the case in which the required flow amount in addition to the required load are set, and it is possible to select the chiller to be subjected to stage increase or stage decrease in such a manner that the COP of the chiller system 1 increases.

As described above, the chiller control apparatus 100 obtains the COP depending on environment of the chillers and selects based on the obtained COP, a chiller whose operation state is to be changed. Thereby, it is possible to appropriately select a chiller to be subjected to stage increase or stage decrease depending on a situation, in order to efficiently operate the entire chiller system stage.

Further, an operator of the chiller system 1 can operate the chiller system 1 while keeping the optimal operation range even when the operator does not know the characteristics of the chillers in detail.

Further, a program for realizing all or part of functions of the chiller control apparatus 100 may be recorded in a computer-readable recording medium, and a computer system may read and execute the program recorded in this recording medium to perform the process of each unit. Further, the "computer system" cited herein includes an OS and hardware such as peripheral devices.

Further, the "computer system" also includes a homepage-providing environment (or a display environment) if a WWW system is used.

Further, the "computer-readable recording medium" refers to a portable medium such as a flexible disk, a magnetic optical disc, a ROM, and a CD-ROM, or a storage device such as a hard disk embedded in the computer system. The "computer-readable recording medium" also includes a recording medium that dynamically holds a program for a short time, like a communication line in a case in which the program is transmitted via a network such as the Internet or a communication line such as a telephone line, or a recording medium that holds a program for a certain time, like a volatile memory in the computer system including a server and a client in the above case. Further, the program may be a program for realizing part of the above-described functions or may be a program capable of realizing the above-described functions in combination with a program already recorded in the computer system.

While the embodiments of the present invention have been described above with reference to the drawings, a specific configuration is not limited to the embodiments, and various variations made without departing from the scope of the present invention as defined by the claims.

INDUSTRIAL APPLICABILITY

The present invention is suitable for use in a chiller control apparatus that controls chillers in a chiller system including a plurality of chillers.

DESCRIPTION OF REFERENCE NUMERALS

100: chiller control apparatus

111: data acquisition unit
112: required load determination unit
113: required load calculation unit
121: stage increase determination unit
122: insufficient load value calculation unit
123: chiller-to-be-operated selection unit
131: stage decrease determination unit
132: excess load value calculation unit
133: chiller-to-be-stopped selection unit
141: operation command unit
151: operation pattern extraction unit

**Claims**

1. A chiller control apparatus (100) for controlling a plurality of chillers (21) and supplying cold or heat, the chiller control apparatus (100) comprising:

   a chiller selection unit configured to select the chiller (21) to be operated from among the plurality of chillers (21)according to a required load; and
   an operation command unit (141) configured to output an operation signal corresponding to the required load, to the chiller (21) selected by the chiller selection unit,
   wherein the chiller selection unit comprises:

      a number-of-chillers change determination unit (112,211,131) configured to determine based on the required load whether to change the number of currently selected chillers (21); and
      a chiller determination unit configured to determine a chiller (21) whose operation state is to be changed, based on a relationship between a load of each chiller (21) and an efficiency index value acquired in advance and on the required load when the number of chillers (21) is changed based on a result of determination by the number-of-chillers change determination unit

   **characterized in that** the chiller determination unit comprises:

      an insufficient load value calculation unit (122) configured to obtain an insufficient load value for each currently operating chiller (21)by subtracting the required load from an optimal-load-range high value sum that is a sum of optimal-load-range high values, each of the optimal-load-range high values being set for each chiller (21)as a threshold value of a load at a high load side that is an allowed efficiency range, in a case that the number-of-chillers change determination unit determines to increase the number of chillers; and
      a chiller-to-be-operated selection unit (123) configured to obtain, for each of chillers (21) that are currently stopped, an efficiency index value when the chiller is operated with the insufficient load value, based on the insufficient load value obtained by the insufficient load value calculation unit and the relationship between the load and the efficiency index value, and select a chiller (21) indicating the highest efficiency index value as a chiller (21) to be operated.

2. The chiller control apparatus according to claim 1, wherein the chiller determination unit comprises:

   a stage increase operation pattern extraction unit configured to obtain all chiller operation patterns of combinations of chillers (21)selected from currently stopped chillers and currently operating chillers, in a case that the number-of-chillers change determination unit determines to change the number of chillers; and
   a chiller-to-be-operated selection unit (123) configured to obtain efficiency index values for all the chiller operation patterns obtained by the stage increase operation pattern extraction unit and select a chiller corresponding to the chiller operation pattern making the efficiency index value highest, as a chiller to be operated.

3. The chiller control apparatus according to claim 1 or 2, wherein, in a case that there are a plurality of selectable chillers (21), the chiller-to-be-operated selection unit (123) is configured to acquire an operation time of the corresponding chiller (21) and selects a chiller having the shortest operation time.

4. The chiller control apparatus according to any one of claims 1 to 3, wherein the chiller determination unit comprises:

a stage decrease operation pattern extraction unit (131) configured to obtain all chiller operation patterns of combinations of chillers whose operation is kept by stopping one chiller of the currently operating chillers in a case that the number-of-chillers change determination unit determines to decrease the number of chillers; and a chiller-to-be-stopped selection unit (133) configured to obtain an entire efficiency index value for all the chiller operation patterns obtained by the stage decrease operation pattern extraction unit, and select a chiller (21) corresponding to the chiller operation pattern making the efficiency index value highest, as a chiller to be stopped.

5. The chiller control apparatus according to any one of claims 1 to 3, wherein the chiller determination unit comprises:

an excess load value calculation unit (132) configured to obtain an excess load value for each currently operating chiller by subtracting from the required load, an optimal-load-range low value sum obtained by summing optimal-load-range low values, each of the optimal-load-range low values being set for each chiller as a threshold value of a load at a low load side that is an allowed efficiency range, in a case that the number-of-chillers change determination unit determines to decrease the number of chillers; and
a chiller-to-be-stopped selection unit (133) configured to obtain, for each of currently operating chillers, an efficiency index value when the chiller is operated with the excess load value, based on the excess load value obtained by the excess load value calculation unit and the relationship between the load and the efficiency index value, and select a chiller indicating the lowest efficiency index value as a chiller to be stopped.

6. The chiller control apparatus according to claim 4 or 5, wherein in a case that there are a plurality of selectable chillers (21), the chiller-to-be-stopped selection unit (133) is configured to acquire an operation time of the corresponding chiller (21) and select a chiller having the longest operation time.

**Patentansprüche**

1. Kühlapparatsteuervorrichtung (100) zum Steuern einer Mehrzahl von Kühlapparaten (21) und Zuführen von Kälte oder Wärme, wobei die Kühlapparatsteuervorrichtung (100) aufweist:

eine Kühlapparat-Auswahleinheit, die dazu eingerichtet ist, den zu betreibenden Kühlapparat (21) aus der Mehrzahl von Kühlapparaten (21) gemäß einer erforderlichen Last auszuwählen; und
eine Betriebsbefehlseinheit (141), die dazu eingerichtet ist, ein Betriebssignal entsprechend der erforderlichen Last an den von der Kühlapparat-Auswahleinheit ausgewählten Kühlapparat auszugeben;
wobei die Kühlapparat-Auswahleinheit aufweist:

eine Kühlapparatanzahländerungs-Bestimmungseinheit (112, 211, 131), die dazu eingerichtet ist, auf der Basis der erforderlichen Last zu bestimmen, ob die Anzahl an momentan ausgewählten Kühlapparaten (21) geändert werden soll; und
eine Kühlapparat-Bestimmungseinheit, die dazu eingerichtet ist, einen Kühlapparat (21) zu bestimmen, dessen Betriebszustand geändert werden soll auf der Basis eines Verhältnisses zwischen einer Last jedes Kühlapparats (21) und einem Effizienzindexwert, der vorab erfasst wird und der erforderlichen Last, wenn die Anzahl an Kühlapparaten (21) auf der Basis eines Bestimmungsergebnisses der Kühlapparatanzahländerungs-Bestimmungseinheit geändert wird,

**dadurch gekennzeichnet, dass** die Kühlapparat-Bestimmungseinheit aufweist:

eine einen unzureichenden Lastwert berechnende Einheit (122), die dazu eingerichtet ist, einen unzureichenden Lastwert für jeden momentan betriebenen Kühlapparat (21) zu erhalten durch Subtrahieren der erforderlichen Last von einer optimalen Höchstlastsumme, welche eine Summe von optimalen Höchstlastwerten ist, wobei jeder der optimalen Höchstlastwerte für jeden Kühlapparat (21) als ein Schwellenwert einer Hochlastseite gesetzt ist, die ein zulässiger Effizienzbereich ist, in einem Fall, dass die Kühlapparatanzahländerungs-Bestimmungseinheit bestimmt, dass die Anzahl an Kühlapparaten erhöht wird; und
eine Auswahleinheit (123) für den zu betreibenden Kühlapparat, die dazu eingerichtet ist, für jeden der Kühlapparate (21), die momentan gestoppt sind, einen Effizienzindexwert zu erhalten, wenn der Kühlapparat mit dem unzureichenden Lastwert betrieben wird, auf der Basis des unzureichenden Lastwerts, der von der einen unzureichenden Lastwert berechnenden Einheit erhalten wurde, und dem Verhältnis zwischen der Last und dem Effizienzindexwert, und einen Kühlapparat (21), der den höchsten Effizienzindexwert anzeigt, als einen zu betreibenden Kühlapparat (21) anzeigt, auszuwählen.

**2.** Kühlapparatsteuervorrichtung nach Anspruch 1, wobei die Kühlapparat-Bestimmungseinheit aufweist:

eine Stufenerhöhung-Betriebsmuster-Extraktionseinheit, die dazu eingerichtet ist, alle Kühlapparat-Betriebsmuster von Kombination von Kühlapparaten (21), die aus den momentan gestoppten Kühlapparaten und momentan betriebenen Kühlapparaten ausgewählt sind, zu erhalten in einem Fall, dass die Kühlapparatanzahländerungs-Bestimmungseinheit bestimmt, die Anzahl der Kühlapparate zu ändern; und
eine Auswahleinheit (123) für den zu betreibenden Kühlapparat, die dazu eingerichtet ist, Effizienzindexwerte für alle Kühlapparatbetriebsmuster zu erhalten, die von der Stufenerhöhungs-Betriebsmuster-Extraktionseinheit erhalten wurden, und einen Kühlapparat entsprechend des Kühlapparatbetriebsmusters, das den höchsten Effizienzindexwert erzielt, als den zu betreibenden Kühlapparat auszuwählen.

**3.** Kühlapparatsteuervorrichtung nach Anspruch 1 oder 2, wobei in einem Fall, dass es eine Mehrzahl von auswählbaren Kühlapparaten (21) gibt, die Auswahleinheit (123) für den zu betreibenden Kühlapparat dazu eingerichtet ist, eine Betriebszeit des entsprechenden Kühlapparats (21) zu erfassen und einen Kühlapparat wählt, der die kürzeste Betriebszeit hat.

**4.** Kühlapparatsteuervorrichtung nach einem der Ansprüche 1 bis 3, wobei die Kühlapparat-Bestimmungseinheit aufweist:

eine Stufenreduktions-Betriebsmuster-Extraktionseinheit (131), die dazu eingerichtet ist, alle Kühlapparat-Betriebsmuster von Kombinationen von Kühlapparaten zu erhalten, deren Betrieb beibehalten wird durch Stoppen eines Kühlapparats der momentan betriebenen Kühlapparate in einem Fall, dass die Kühlapparatanzahländerungs-Bestimmungseinheit bestimmt, dass die Anzahl an Kühlapparaten reduziert wird; und
eine Auswahleinheit (133) für den zu stoppenden Kühlapparat, die dazu eingerichtet ist, einen gesamten Effizienzindexwert für alle Kühlapparat-Betriebsmuster zu erhalten, die von der Stufenreduktions-Betriebsmuster-Extraktionseinheit erhalten wurden, und einen Kühlapparat (21) entsprechend dem Kühlapparat-Betriebsmuster, das den höchsten Effizienzindexwert erzielt, als den Kühlapparat auszuwählen, der gestoppt wird.

**5.** Kühlapparatsteuervorrichtung nach einem der Ansprüche 1 bis 3, wobei die Kühlapparat-Bestimmungseinheit aufweist:

eine Überlastwert-Berechnungseinheit (132), die dazu eingerichtet ist, einen Überlastwert für jeden momentan betriebenen Kühlapparat zu erhalten durch Subtraktion einer kleinen Optimallastbereich-Wertesumme, die durch Summieren der niedrigen Optimallastbereichwerte erhalten wird, von der erforderlichen Last, wobei jeder der niedrigen Optimallastbereichwerte für jeden Kühlapparat als Schwellenwert einer Last an einer Niederlastseite gesetzt wird, die ein zulässiger Effizienzbereich ist, in einem Fall, dass die Kühlapparatanzahländerungs-Bestimmungseinheit bestimmt, die Anzahl an Kühlapparaten zu reduzieren; und
eine Auswahleinheit (133) für den zu stoppenden Kühlapparat, die dazu eingerichtet ist, für jeden der momentan betriebenen Kühlapparate einen Effizienzindexwert zu erhalten, wenn der Kühlapparat mit dem Überlastwert betrieben wird, auf der Basis des Überlastwerts, der von der Berechnungseinheit des Überlastwerts erhalten wird, und dem Verhältnis zwischen der Last und dem Effizienzindexwert, und einen Kühlapparat, der den niedrigsten Effizienzindexwert anzeigt, als einen zu stoppenden Kühlapparat auszuwählen.

**6.** Kühlapparatsteuervorrichtung nach Anspruch 4 oder 5, wobei in einem Fall, dass es eine Mehrzahl von auswählbaren Kühlapparaten (21) gibt, die Auswahleinheit (133) für den zu stoppenden Kühlapparat dazu eingerichtet ist, eine Betriebszeit des entsprechenden Kühlapparats (21) zu erfassen und einen Kühlapparat auszuwählen, der die längste Betriebszeit aufweist.

**Revendications**

**1.** Appareil de régulation de refroidisseur (100) pour réguler une pluralité de refroidisseurs (21) et fournir froid ou chaleur, l'appareil de régulation de refroidisseur (100) comprenant :

une unité de sélection de refroidisseur configurée pour sélectionner le refroidisseur (21) à faire fonctionner parmi la pluralité de refroidisseurs (21) en fonction d'une charge requise ; et
une unité de commande de fonctionnement (141) configurée pour sortir un signal de fonctionnement correspondant à la charge requise, vers le refroidisseur (21) sélectionné par l'unité de sélection de refroidisseur,

dans lequel l'unité de sélection de refroidisseur comprend :

une unité de détermination de modification du nombre-de-refroidisseurs (112, 211, 131) configurée pour déterminer sur la base de la charge requise la nécessité de modifier le nombre de refroidisseurs (21) actuellement sélectionnés ; et

une unité de détermination de refroidisseur configurée pour déterminer un refroidisseur (21) dont le fonctionnement doit être modifié, sur la base d'une relation entre une charge de chaque refroidisseur (21) et une valeur d'indice d'efficacité acquise à l'avance et de la charge requise lorsque le nombre de refroidisseurs (21) est modifié sur la base d'un résultat de détermination par l'unité de détermination de modification du nombre-de-refroidisseurs

**caractérisé en ce que** l'unité de détermination de refroidisseur comprend :

une unité de calcul de valeur de charge insuffisante (122) configurée pour obtenir une valeur de charge insuffisante pour chaque refroidisseur (21) actuellement en fonctionnement en soustrayant la charge requise d'une somme de valeur élevée de plage-de-charge-optimale qui est une somme de valeurs élevées de plage-de-charge-optimale, chacune des valeurs élevées de plage-de-charge-optimale étant établie pour chaque refroidisseur (21) en tant que valeur seuil d'une charge sur un côté à charge élevée qui est une plage d'efficacité autorisée, dans le cas où l'unité de détermination de modification du nombre-de-refroidisseurs détermine qu'il faut augmenter le nombre de refroidisseurs ; et

une unité de sélection de refroidisseurs-à-faire-fonctionner (123) configurée pour obtenir, pour chacun des refroidisseurs (21) qui sont actuellement arrêtés, une valeur d'indice d'efficacité lorsque le refroidisseur fonctionne avec la valeur de charge insuffisante, sur la base de la valeur de charge insuffisante obtenue par l'unité de calcul de valeur de charge insuffisante et de la relation entre la charge et la valeur d'indice d'efficacité, et sélectionner un refroidisseur (21) indiquant la valeur d'indice d'efficacité la plus élevée en tant que refroidisseur (21) à faire fonctionner.

2. Appareil de régulation de refroidisseur selon la revendication 1, dans lequel l'unité de détermination de refroidisseur comprend :

une unité d'extraction de schémas de fonctionnement d'augmentation de niveau configurée pour obtenir tous les schémas de fonctionnement de refroidisseur ou une combinaison de refroidisseurs (21) sélectionnés parmi des refroidisseurs actuellement arrêtés et des refroidisseurs actuellement en fonctionnement, dans le cas où l'unité de détermination de modification du nombre-de-refroidisseurs détermine qu'il faut modifier le nombre de refroidisseurs ; et

une unité de sélection de refroidisseurs-à-faire-fonctionner (123) configurée pour obtenir des valeurs d'indice d'efficacité pour tous les schémas de fonctionnement de refroidisseur obtenus par l'unité d'extraction de schémas de fonctionnement d'augmentation de niveau et sélectionner un refroidisseur correspondant au schéma de fonctionnement de refroidisseur rendant la valeur d'indice d'efficacité la plus élevée, en tant que refroidisseur à faire fonctionner.

3. Appareil de régulation de refroidisseur selon la revendication 1 ou 2, dans lequel, dans le cas où il y a une pluralité de refroidisseurs (21) pouvant être sélectionnés, l'unité de sélection de refroidisseurs-à-faire-fonctionner (123) est configurée pour acquérir un temps de fonctionnement du refroidisseur (21) correspondant et sélectionne un refroidisseur présentant le temps de fonctionnement le plus court.

4. Appareil de régulation de refroidisseur selon l'une quelconque des revendications 1 à 3, dans lequel l'unité de détermination de refroidisseur comprend :

une unité d'extraction de schémas de fonctionnement de diminution de niveau (131) configurée pour obtenir tous les schémas de fonctionnement de refroidisseur ou des combinaisons de refroidisseurs dont le fonctionnement est conservé en arrêtant un refroidisseur parmi les refroidisseurs actuellement en fonctionnement dans le cas où l'unité de détermination de modification du nombre-de-refroidisseurs détermine qu'il faut diminuer le nombre de refroidisseurs ; et

une unité de sélection de refroidisseur-à-arrêter (133) configurée pour obtenir une valeur entière d'indice d'efficacité pour tous les schémas de fonctionnement de refroidisseur obtenus par l'unité d'extraction de schémas de fonctionnement de diminution de niveau, et sélectionner un refroidisseur (21) correspondant au schéma de fonctionnement de refroidisseur rendant la valeur d'indice d'efficacité la plus élevée, en tant que refroidisseur à arrêter.

**5.** Appareil de régulation de refroidisseur selon l'une quelconque des revendications 1 à 3, dans lequel l'unité de détermination de refroidisseur comprend :

une unité de calcul de valeur de charge en excès (132) configurée pour obtenir une valeur de charge en excès pour chaque refroidisseur actuellement en fonctionnement en soustrayant de la charge requise, une somme de valeur basse de plage-de-charge-optimale obtenue en additionnant des valeurs basses de plage-de-charge-optimale, chacune des valeurs basses de plage-de-charge-optimale étant établie pour chaque refroidisseur en tant que valeur seuil d'une charge sur un côté à charge basse qui est une plage d'efficacité autorisée, dans le cas où l'unité de détermination de modification du nombre-de-refroidisseurs détermine qu'il faut diminuer le nombre de refroidisseurs ; et

une unité de sélection de refroidisseur-à-arrêter (133) configurée pour obtenir, pour chacun parmi des refroidisseurs actuellement en fonctionnement, une valeur d'indice d'efficacité lorsque le refroidisseur fonctionne avec la valeur de charge en excès, sur la base de la valeur de charge en excès obtenue par l'unité de calcul de valeur de charge en excès et de la relation entre la charge et la valeur d'indice d'efficacité, et sélectionner un refroidisseur indiquant la valeur d'indice d'efficacité la plus basse en tant que refroidisseur à arrêter.

**6.** Appareil de régulation de refroidisseur selon la revendication 4 ou 5, dans lequel dans le cas où il y a une pluralité de refroidisseurs (21) pouvant être sélectionnés, l'unité de sélection de refroidisseurs-à-arrêter (133) est configurée pour acquérir un temps de fonctionnement du refroidisseur (21) correspondant et sélectionner un refroidisseur présentant le temps de fonctionnement le plus long.

FIG. 1

EP 2 602 565 B1

FIG. 2

EP 2 602 565 B1

## FIG. 3

FIG. 4

FIG. 5

EP 2 602 565 B1

# FIG. 6

```
                    START

                      │
                      ▼
           ┌──────────────────────┐  S201
           │  TRANSMIT COOLING WATER │
           │  INLET TEMPERATURE AND  │
           │ COOLING WATER FLOW AMOUNT│
           └──────────────────────┘
                      │
                      ▼
           ┌──────────────────────┐  S202
           │       RECEIVE        │
           │ OPTIMAL-LOAD-RELATED │
           │ INFORMATION OF EACH CHILLER│
           └──────────────────────┘
                      │
                      ▼
                   S203
              ΣQopt < Qr ?        ──NO──→
                      │
                     YES
                      ▼
                   S211
              STAGE INCREASE?     ──NO──→
                      │
                     YES
                      ▼
           ┌──────────────────────┐  S221
           │    CALCULATE ΔQs     │
           └──────────────────────┘
                      │
                      ▼
           ┌──────────────────────┐  S222
           │  DETERMINE CHILLER   │
           │    TO BE OPERATED    │
           └──────────────────────┘
                      │
                      ▼
                    END
```

S231  ΣFopt < Fr ?  — YES / NO

S241  STAGE DECREASE?  — NO / YES

S251  IS NUMBER OF OPERATING CHILLERS 2 OR MORE ? — NO / YES

S261  CALCULATE ΔQd

S262  DETERMINE CHILLER TO BE STOPPED

S271  Qr < Qmin ?  — NO / YES

S281  IS THERE CHILLER WHOSE COP IS HIGH? — NO / YES

S291  DETERMINE CHILLER TO BE SWITCHED

**EP 2 602 565 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010177749 A
- JP 2009204262 A

- US 4463574 A